# EUROPEAN PATENT SPECIFICATION

(11) **EP 3 202 253 B1**
(45) Date of publication and mention of the grant of the patent: **29.01.2020**
(21) Application number: 17151122.3
(22) Date of filing: 12.01.2017
(51) Int. Cl.: A01G 23/083, B27B 25/02, B27B 31/00

(54) **FEED MEANS AND LOG PROCESSING HEAD**
ZUFÜHRMITTEL UND RUNDHOLZVERARBEITUNGSKOPF
MOYENS D'ALIMENTATION ET TÊTE DE TRAITEMENT DE GRUMES

(30) Priority: 04.02.2016 FI 20165079
(43) Date of publication of application: 09.08.2017
(73) Proprietor: Waratah OM OY, 80100 Joensuu (FI)
(72) Inventor: Alfthan, Arto, 37700 Sääksmäki (FI)
(74) Representative: John Deere GmbH & Co. KG

(56) References cited:
- EP-A1- 2 700 300
- WO-A1-2007/069913
- AU-A1- 2009 208 111

## Description

This invention relates to feed means for a log with a carrier and elevations on its circumference and to a log processing head.

Today's harvester heads have steel feed rolls with ribs running under a constant angle of e.g. 38 degrees. Especially when harvesting Eucalyptus trees, where debarking is difficult and critical, the speed of Eucalyptus stem rotation changes a lot from the base to the top of the tree by using such feed rolls. This causes many problems, like complicate debarking, reduced feeding speed, errors for the length measuring, etc.

From WO2006/100340 A1 it is known to use feed rolls, the orientation of which can be changed, such that the angle of the elevations varies with respect to the longitudinal direction of the tree moved through the harvester head.

WO 2007/069913 discloses a wheel for the removal of the surface layer from an item, to be having one or more primary plates oriented substantially across the direction of rotation. The wheel further including a secondary cutting blade oriented substantially in the same direction as the direction of rotation.

EP 2 700 300 A1 depicts a feed wheel for wood handling units. The outer surface of the feed wheel comprises a gripping surface with gripping elements.

The problem this invention is based on is seen in the need for a proper handling of logs of different diameters
This problem is solved in an innovative way by means of the teaching of claims 1 and 9, whereas advantageous features further developing the invention are given in the claims related to them.

By means of this teaching the axial and tangential/radial components of the force applied by the elevation to a log varies with the inclination of the elevation. Depending on the place, where the feed means contacts the log by means of its elevations this causes more or less rotation and less or more axial movement. As the diameter of the log determines, where it will hit the feed means and as with a varying diameter the place of contact varies, more rotation will be achieved at a big diameter log as compared to a small diameter log, whereas the change will happened while the tapering log moves through the processing head. The processing head can be provided with or without delimb knives and with or without a top knife. All this depends on whether the processing head will only debark or delimb or also harvest a tree. The processing head may be of a 4-wheel, 3-wheel or 2-wheel type, whereas latter is preferred.

Although preferred, it is not necessary that the angle always gets steeper; it is also possible to continue with the same angle for a certain distance. However, an increasing angle will result in also increasing tangential movement forces. So, a bigger diameter stem may be rotated more than a small diameter stem or log.

For some applications a linear progression of the elevations is sufficient, for others additional aggressiveness is helpful.

As manifold as are the forms of elevations as manifold are the ways to fix them on the carrier. In the most common way the elevations are steel bars or spikes welded onto the peripheral surface of a tube like carrier made of steel. These bars may be dull or sharp. In other cases a rubber wheel is provided with a profile comprising groves and elevations cut from a base or vulcanized onto a base. Elevations can also be casted in unity with the carrier, or groves and elevations are pressed into strong sheet metal, which is rolled up to a wheel. Also, the elevations can be fixed on the carrier by bolts, reaching through a rim or chains stretched over said carrier, in particular, if the carrier is made of rubber.

Also the carriers can be of many different styles depending on the application. The simplest way is a carrier formed like a rim type metal cylinder onto or in which the elevations are attached as described before. Yet, the carrier can also be an endless chain with several strings running over an idler wheel and a drive wheel. In other applications the carrier is made of rubber, which is fixed to a steel rim, like a tire. The elevations may be formed in the rubber or it may be chains with elevations pulled over the rubber. Finally, instead of a single drum extending over the entire axial width of the feed means a series of mainly radially extending, cylindrical roll portions like spokes are assembled along an axle and connected to each other.

In the case that several spoke type carrier portions are used, they may all be of the same design, however, when assembled, each carrier portion may be tangentially offset with respect to a neighboring carrier portion, which will provide for the progression of the angle of the elevations. The progressiveness can be adjusted by said offset.

While it may be preferred having uninterrupted elevations, it is also possible to have spike like elevations leaving gaps between each other and which may grasp a log more aggressively than bars. Bars however create less damage on the surface of the log. Instead of spikes also short bars may be used or bars with embossed spikes.

The start and end angle of the elevations with respect to the rotation axis of the feed means or the longitudinal log axis depends on the breed, the condition (hardness, humidity, age, etc.) of the log and the bark and needs to be selected respectively. However, it has been found that a range of 5 to 90 degrees between start and end of the line of elevations is very suitable on a carrier with a diameter of about 500 to 600 mm like 560 mm.

A log pulled through and guided in a log processing head with a frame, two feed arms and a driven feed means journalled on each arm, is guided by the frame or the respective portion of it between the feed means and thus the varying diameter will cause a move of the contact area on the feed means and consequently a change of the axial movement force and speed. Said head may be a mere processing head grasping logs from a pile for debarking and/or lengthening or it may be a harvester head debarking the log while it is cut to length, like in the case of Eucalyptus harvesting.

Depending on the number and kind of feed means the feed arms are pivoting about an axis in planes parallel or in a plane perpendicular to the log feeding axis. It is most preferred, that the feed means are used in a 2-wheel head with feed arms pivoting about an axis perpendicular to the longitudinal log axis, i.e. horizontal pivot axes, when the head is in an upright position. If three or more feed means are provided only the contact area of the pivoting feed arms will vary, because they follow the diameter of the log. As the contact area between the log and the fixed position feed means will not change with changing diameter of the log their elevation should be selected to not affect the positive effect created by two moving feed means or if the same elevations are used these feed means may be moved laterally to change their contact area as well.

Such a processing head and such feed means may show one or more of the following technical effects: higher productivity and lower fuel consumption (dm³/m³), better "single pass" Eucalyptus tree feeding, simple design, no extra components and no need to control the orientation of the feed means.

In the following one embodiment of the invention is described in more detail and in relation to the drawing. It is shown in:
- Fig. 1: a log processing head in perspective view with feed means in the kind of ordinary feed rolls,
- Fig. 2: a feed means in a schematic view with arrows indicating radial/tangential and axial components of a movement diagram,
- Fig. 3: a rolled up shell surface of a feed means in 2-D depiction with elevations the angle of which does not increase further after an initial phase,
- Fig. 4: a rolled up shell surface of a feed means in 2-D depiction with elevations the angle of which continuously progresses,
- Fig. 5a: a situation in which a small diameter log is grasped at one axial end area of feed means journalled on vertically pivoting arms,
- Fig. 5b: a situation in which a medium diameter log is grasped at a center area of feed means journalled on vertically pivoting arms,
- Fig. 5c: a situation in which a big diameter log is grasped at an opposite axial end area of feed means journalled on vertically pivoting arms,
- Fig. 6a: a situation in which a small diameter log is grasped at one axial end area of feed means journalled on horizontally pivoting arms,
- Fig. 6b: a situation in which a medium diameter log is grasped at a center area of feed means journalled on horizontally pivoting arms, and
- Fig. 6c: a situation in which a big diameter log is grasped at an opposite axial end area of feed means journalled on horizontally pivoting arms.

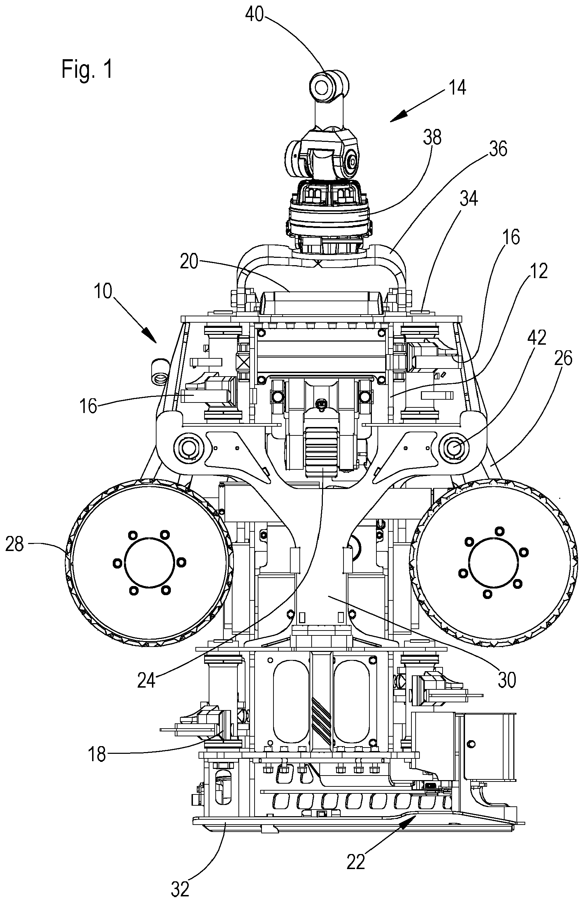

A log processing head 10 shown in figure 1 contains among others a frame 12, a suspension system 14, movable top and bottom knives 16 and 18, a fix top knife 20, a bottom saw unit 22, a measuring unit 24, feed arms 26 and feed means 28.

The log processing head 10 may be used to grasp a tree, cut it from its root, delimb and debark it and cut it into calculated lengths. As an alternative, the log processing head 10 picks one or more logs lying on a pile, delimbs and/or debarks them and cuts them to length. The log processing head 10 may be attached to a purpose built vehicle like a forest harvester or to an excavator. Such heads are known e.g. from WARATAH and John Deere.

The frame 12 has a center beam 30 and is made as a welded structure, to which all afore mentioned and additional components are attached by welding, bolting, bearings etc. In an upright position as shown in figure 1, which is a position, in which a tree is grasped before and during cutting, the frame 12 and the center beam 30 extend substantially vertically. In about the center - seen in the shown vertical orientation - the center beam 30 is connected to the suspension system 14 and at its top region the fix top knife 20 is fastened. At the bottom the center beam 30 is connected to a saw box 32 for the bottom saw unit 22, at the lateral upper and lower right and left side bearings 34 with a vertical bearing axis are provided for the top and bottom knives 16, 18, in the center an opening is given for the measuring unit 24 and between the top and bottom knives 16, 18 bearings 42 exist for the feed arms 26. Finally and not described, valves, hoses, electrical lines, covers etc. are retained by the frame 12. Of course there is a big variety of log processing heads 10 with fewer knives, with a bottom and a top saw unit, with totally different measuring units, etc. which all are included in this description, unless something is expressively excluded.

The suspension system 14 comprises an inverted U-shaped suspension structure 36, a so-called rotator 38 and a link 40. Again, there are other versions of suspension structures 36, like those being connected to the rear of the frame 12, rather than to the side. The rotator 38 constitutes a driven rotation means between the suspension structure 36 and a link 40, which is to be connected to an un-shown boom of a forest harvester, an excavator or similar. The rotator 38 and the link 40 form an universal joint, which allows the log processing head 10 to pivot in two directions in addition to the rotation about a vertical axis. For the sake of simplicity no tilt hydraulic motors are shown, which are connected to the frame 12 with one end and to the suspension structure 36 with the other end and which are able to tilt the frame 12 from a shown upright harvesting position into a horizontal processing position, in which a log L is moved by the feed means 28 along the center beam 30.

Top knives 16 and bottom knives 18 are connected to the frame in bearings 34 to pivot horizontally when looking to the upright position in figure 1. The shape of the knives 16, 18 is chosen such that together they form a substantially round and cylindrical space, through which logs L with branches on it can be moved. Said round, cylindrical space has a center line, which is parallel to the center beam 30. The knives 16, 18 are brought in such a close contact with the log L, that the branches are sheared off, when the log L pulled by the feed means 28 hits the branches against the edge of the knives 16, 18. The knives 16, 18 are also used to debark the logs L, i.e. strip the bark off, which is important especially at Eucalyptus trees.

The fix top knife 20 cuts off the branches at the side of the log L facing the center beam 30, since there the movable knives 16, 18 have no access. Although the knife 20 is called fix, it can also be mounted flexible to adjust to irregularities of the log L. The fix top knife 20 also shears of the bark from the log.

The bottom saw unit 24 is formed as a chain saw, which can pivot parallel to the knives 16, 18 and through the cylindrical space formed by them to cross-cut a log L, as this is well known.

When the bottom saw unit 24 is in its non-operative position, it is covered by the saw box 32. Instead of a chain saw, also a clamping knife or a rotating saw blade could be used.

The measuring unit 24 is provided to measure the advancement of the log L along the center beam 30. This may happen by means of a wheel and a rotation sensor as shown or by a contact less sensor or any other means.

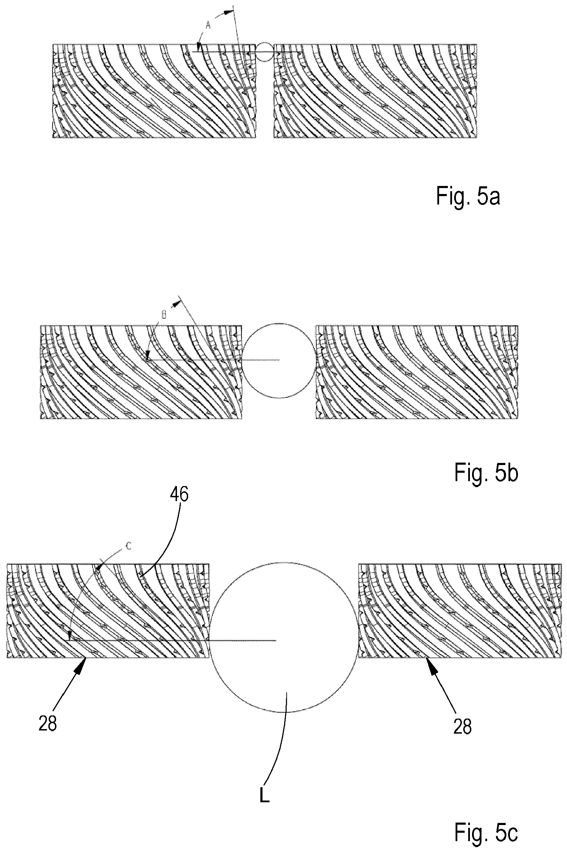

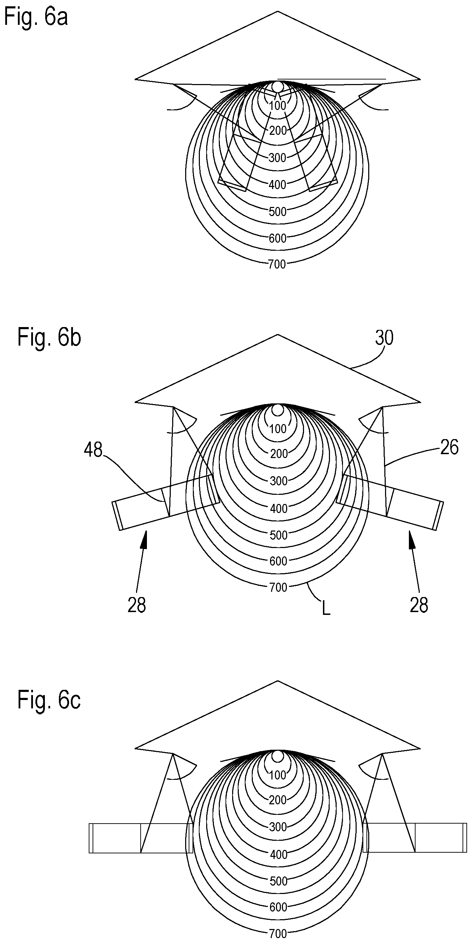

Each feed arm 26 is connected to the frame 12 by means of a bearing 42 and is moved by means of an un-shown, but well known hydraulic cylinder. In the log processing head 10 shown in figure 1 and 5a to 5c the pivot axis of the bearing 42 extends perpendicular to the center beam 30 and parallel to the rotation axis of the feed means 28. This is typically the case, if only two feed means 28 are provided. In a log processing head 10 illustrated in figures 6a to 6c the pivot axis extends parallel to the longitudinal axis of the center beam 30, which often is the case, when the log processing head 10 has three or four feed means 28. On each feed arm 26 a hydraulic motor is provided with an output shaft having a hub for receiving the feed means 28.

Feed means 28 are used for two purposes, namely to transport the log L in the longitudinal direction of the center beam 30, but also to rotate the log L during this longitudinal movement. The latter rotational movement is especially important for debarking. The rotation brings the entire 360 degree circumference in contact with knives and stips of the strands of bark, which is particularly critical at Eucalyptus. Various kinds of feed means 28 are known, like that of pure feed rolls, which form the basis of the ongoing description. Other kinds comprise a steel structure on the outer side of which a rubber shell is mounted, which again carries chains. Yet another variety has parallel runs of chains with connecting rungs slung around two distant wheels, at least one of them being driven. In each case the driven feed means 28 has a radially extending not shown flange or spoke, which is bolted to the aforesaid hub of the hydraulic motor on the feed arms 26 for transferring the rotational movement.

According to the following description the feed means 28 is a carrier 44 provided on the radially outer circumference of the hub or spoke, and which in this case is a steel shell, like a part of a strong tube. Said carrier 44 has a certain axial extension like 250 mm as to be seen in all the figures, so that it has a considerable area of contact with the log L. As it becomes apparent in figures 5a - 6c said area of contact moves axially on the carrier 44 depending on the diameter of the log L, since the log L slides along the center beam 30 and the fix top knife 20, which location is fix, whereas the feed arms 26 pivot to accommodate to the diameter of the log L and thus change the area of contact. Elevations 46 are provided, which are either an integral part of or bolted or welded to the carrier 44. These elevations 46 may be of many different kinds and cross sections, which vary depending on the breed of the log L to be handled, its condition etc. but all in all they shall provide for sufficient grip between the feed means 28 and the log L in order to move it longitudinally and tangentially. The kind of elevations 46 also has an effect on the aggressiveness of said grip and the marks the feed means 28 leaves on the log L. All contact points of an elevation 46 follow a line and all the lines are parallel to each other, irrespective, whether they are shaped as continuous metals strip as shown or separate spikes following a certain pattern. Elevations 46 as such are known.

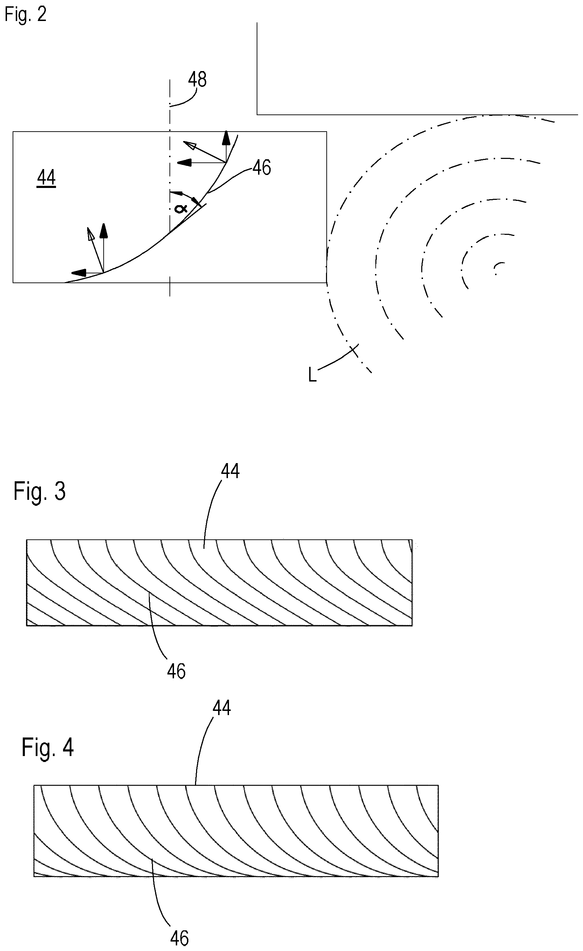

As it is shown in figure 2, the elevations 46 do neither follow an axial direction or a radial/tangential direction only, but are inclined under an angle alpha (α) with respect to the rotation axis 48 of the feed means 28, which inclination results in an axial and a tangential component. Figures 3 and 4, which are a roll-up of the circumference of the carrier 44 show, that angle alpha varies along the axial position of the feed means 28 and at one side is pretty flat, but on the opposite side it is pretty steep. To the contrary in ordinary feed means the angle may be constant at 38 degrees. The difference between the feed means 28 in figures 3 and 4 is, that in figure 3 after a certain progression the angle alpha does not get steeper after about the half of the axial dimension, whereas in figure 4 the angle alpha grows continuously along the entire width of the feed means 28. According to figures 5a to 6c the area with the flat angle alpha, see complementary angle "A" in figure 5a, is determined for logs L or log portions of a small diameter and is about 5 to 30 degrees with respect to the rotation axis 48; the area of medium angle alpha, see complimentary angle "B" in figure 5b, is for the medium diameter log L and is about 20 to 60 degrees with respect to the rotation axis 48; and the area of the biggest angle, see complimentary angle "C" in figure 5c, is determined for biggest diameter logs L and is about 45 to 90 degrees with respect to the rotation axis 48. Due to the varying angles alpha and thus also the changes of the axial and radial/tangential components of the angle at each point along the line of elevations 46 a bigger diameter log L will be rotated more than a small diameter log L.

A log processing head 10 with feed means 28 according to figures 6a - 6c typically has three or four feed means 28 - one or two inner ones retained in openings in the center beam 30 and one on each feed arm 26. The area of contact would move on the feed means 28 on the feed arms 26. On the inner center feed means 28 it would be possible to have a "neutral" elevation pattern, which does not obstruct the forward and rotational movement, or to have one or two center feed means 28 similar to those on the feed arms 26, which are moved axially to bring areas of differently inclined elevations 46 in contact with the log L.

While the carrier 44 shown in the figures is of one piece over the entire axial length, it would also be possible to have several, like 4 to 6 carrier portions of shorter axial dimensions than a complete carrier 44, which portions are assembled along the rotation axis 48 and connected to each other as a stack. Each such carrier portion could have the same inclined elevation(s) 46 and the different angles along a line would be achieved by a tangential offset between the carrier portions.

## Claims

1. Feed means (28) for a log with a cylindrical carrier (44) and elevations (46) on its circumference,
**characterized in that** the elevations (46) follow parallel lines inclined under a varying angle alpha along the axial position of the feed means (28) with respect to an axis defined on the circumference of the cylindrical carrier (44) and parallel to the rotation axis (48) of the feed means, so that the feed means (28) is adapted to vary the axial and tangential/radial forces applied by the elevations(46) depending on the axial position of the feed means (28).

2. Feed means according to claim 1, whereas the angle alpha is continuously progressive.

3. Feed means according to claim 1 or 2, whereas the progression is linear.

4. Feed means according to one or more of the preceding claims, whereas the elevations (46) are welded, bolted, casted, vulcanized or embossed onto or into the carrier (44).

5. Feed means according to one or more of the preceding claims 1 to 3, whereas the carrier (44) is formed like a rim type metal cylinder, a chain running over idler and drive wheels, a rubber cylinder, or a series of mainly radially extending, cylindrical carrier portions assembled along an axle and connected to each other.

6. Feed means according to claim 5, whereas the carrier portions are of the same design but tangentially offset relative to a common rotation axis (48).

7. Feed means according to one or more of the previous claims, whereas the elevations (46) extend over part of the axial extension of the feed means (28) only.

8. Feed means according to one or more of the previous claims, whereas the angle ranges from 5 to 90 degrees on a carrier (44) with a diameter between 500 and 600 mm.

9. Log processing head, in particular a harvester head, having a frame (12), two pivoting feed arms (26) and driven feed means (28) according to one or more of the preceding claims each of latter journalled on a feed arm (26), whereas a center beam (30) of the frame (12) provides for guidance of the log L between the feed means (28).

10. Log processing head according to claim 9, whereas the feed arms (26) are pivoting about axes in planes parallel or perpendicular to a log feeding axis.

## Patentansprüche

1. Zuführmittel (28) für ein Rundholz mit einem zylindrischen Träger (44) und Erhöhungen (46) an seinem Umfang,
**dadurch gekennzeichnet, dass** die Erhöhungen (46) parallelen Linien folgen, die in einem veränderlichen Winkel Alpha entlang der axialen Position des Zuführmittels (28) in Bezug auf eine Achse geneigt sind, die an dem Umfang des zylindrischen Trägers (44) definiert ist und parallel zu der Drehachse (48) des Zuführmittels verläuft, so dass das Zuführmittel (28) geeignet ist, die axialen und tangentialen/radialen Kräfte, die von den Erhöhungen (46) ausgeübt werden, je nach der axialen Position des Zuführmittels (28) zu verändern.

2. Zuführmittel nach Anspruch 1, wobei der Winkel Alpha kontinuierlich progressiv ist.

3. Zuführmittel nach Anspruch 1 oder 2, wobei die Progression linear ist.

4. Zuführmittel nach einem oder mehreren der vorhergehenden Ansprüche, wobei die Erhöhungen (46) auf oder in den Träger (44) geschweißt, geschraubt, gegossen, vulkanisiert oder geprägt sind.

5. Zuführmittel nach einem oder mehreren der vorhergehenden Ansprüche 1 bis 3, wobei der Träger (44) wie ein Metallzylinder mit Rand, eine über Laufrad und Antriebsräder laufende Kette, ein Gummizylinder oder eine Reihe von sich hauptsächlich radial erstreckenden zylindrischen Trägerabschnitten ausgebildet ist, die entlang einer Achse montiert und miteinander verbunden sind.

6. Zuführmittel nach Anspruch 5, wobei die Trägerabschnitte auf gleiche Weise ausgeführt, aber tangential relativ zu einer gemeinsamen Drehachse (48) versetzt sind.

7. Zuführmittel nach einem oder mehreren der vorhergehenden Ansprüche, wobei sich die Erhöhungen (46) nur über einen Teil der axialen Ausdehnung des Zuführmittels (28) erstrecken.

8. Zuführmittel nach einem oder mehreren der vorhergehenden Ansprüche, wobei der Winkel in einem Bereich von 5 bis 90 Grad auf einem Träger (44) mit einem Durchmesser zwischen 500 und 600 mm liegt.

9. Rundholzverarbeitungskopf, insbesondere Kopf eines Erntefahrzeugs, der einen Rahmen (12), zwei schwenkbare Zuführarme (26) und angetriebene Zuführmittel (28) nach einem oder mehreren der vorhergehenden Ansprüche aufweist, wobei die Letzteren jeweils an einem Zuführarm (26) gelagert sind, wobei ein Mittelträger (30) des Rahmens (12) für eine Führung des Rundholzes L zwischen den Zuführmitteln (28) sorgt.

10. Rundholzverarbeitungskopf nach Anspruch 9, wobei sich die Zuführarme (26) um Achsen in Ebenen, die parallel oder rechtwinklig zu einer Rundholzzuführachse verlaufen, verschwenken.

## Revendications

1. Moyens d'alimentation (28) pour une grume comportant un support cylindrique (44) et des élévations (46) sur leur circonférence,
**caractérisés en ce que** les élévations (46) suivent des lignes parallèles inclinées suivant un angle alpha variable le long de la position axiale des moyens d'alimentation (28) par rapport à un axe défini sur la circonférence du support cylindrique (44) et parallèle à l'axe de rotation (48) des moyens d'alimentation, de sorte que les moyens d'alimentation (28) sont conçus pour faire varier les forces axiales et tangentielles/radiales appliquées par les élévations (46) en fonction de la position axiale des moyens d'alimentation (28).

2. Moyens d'alimentation selon la revendication 1, dans lesquels l'angle alpha est progressif en continu.

3. Moyens d'alimentation selon la revendication 1 ou 2, dans lesquels la progression est linéaire.

4. Moyens d'alimentation selon l'une quelconque des revendications précédentes, dans lesquels les élévations (46) sont soudées, boulonnées, moulées, vulcanisées ou estampées sur ou dans le support (44).

5. Moyens d'alimentation selon l'une quelconque des revendications 1 à 3, dans lesquels le support (44) est formé en un cylindre métallique de type cylindre de surface, une chaîne fonctionnant sur des roues de support et motrice, un cylindre en caoutchouc, ou une série de parties de support cylindriques s'étendant principalement radialement assemblées le long d'un essieu et reliées les unes aux autres.

6. Moyens d'alimentation selon la revendication 5, dans lesquels les parties de support ont la même conception mais sont décalées tangentiellement par rapport à un axe de rotation commun (48).

7. Moyens d'alimentation selon l'une quelconque des revendications précédentes, dans lesquels les élévations (46) s'étendent sur une partie de l'extension axiale des moyens d'alimentation (28) uniquement.

8. Moyens d'alimentation selon l'une quelconque des revendications précédentes, dans lesquels l'angle est compris entre 5 et 90 degrés sur un support (44) d'un diamètre compris entre 500 et 600 mm.

9. Tête de traitement de grume, en particulier tête d'abattage-ébranchage, comportant un châssis (12), deux bras d'alimentation pivotants (26) et des moyens d'alimentation entraînés (28) selon l'une quelconque des revendications précédentes, chacun des moyens étant tourillonné sur un bras d'alimentation (26), dans laquelle une poutre centrale (30) du châssis (12) permet de guider la grume L entre les moyens d'alimentation (28) .

10. Tête de traitement de grume selon la revendication 9, dans laquelle les bras d'alimentation (26) pivotent autour d'axes dans des plans parallèles ou perpendiculaires à un axe d'alimentation de grume.
